# EUROPÄISCHE PATENTSCHRIFT

(11) **EP 0 584 147 B1**
(45) Veröffentlichungstag und Bekanntmachung des Hinweises auf die Patenterteilung: **25.09.1996**
(21) Anmeldenummer: 92909984.4
(22) Anmeldetag: 08.05.1992
(51) Int. Cl.: G02F 1/15

(54) **ELEKTROCHROMES LICHTVENTIL UND VERFAHREN ZU DESSEN HERSTELLUNG SOWIE ANWENDUNG DESSELBEN**
ELECTROCHROMIC LIGHT VALVE AND METHOD OF MANUFACTURING IT, AS WELL AS ITS USE
VALVE DE LUMIERE ELECTROCHROMIQUE, SON PROCEDE DE PRODUCTION ET SON UTILISATION

(30) Priorität: 16.05.1991 DE 4116059
(43) Veröffentlichungstag der Anmeldung: 02.03.1994
(73) Patentinhaber: FRAUNHOFER-GESELLSCHAFT ZUR FÖRDERUNG DER ANGEWANDTEN FORSCHUNG E.V., 80636 München (DE)
(72) Erfinder: BAUR, Günter, D-7800 Freiburg (DE); SCHLOTTER, Peter, D-7800 Freiburg (DE); STRINITZ, Heinz, D-7808 Waldkirch (DE); WEINBERG, Uta, D-7800 Freiburg (DE)
(86) Internationale Anmeldenummer: EP9201015
(87) Internationale Veröffentlichungsnummer: WO9221052

(56) Entgegenhaltungen:
- WO-A-91/02282
- CH-A- 602 984
- DE-A- 2 924 898
- GB-A- 2 164 170
- SOLAR ENERGY MATERIALS Bd. 14, Nr. 3-5, November 1986, AMSTERDAM, NIEDERLANDE Seiten 175-184; J. NAGAI ET AL.: 'TRANSMISSIVE ELECTROCHROMIC DEVICE' siehe Absatz 4.1; Abbildung 4 siehe Seite 182, Zeile 16; Abbildung 8
- PATENT ABSTRACTS OF JAPAN vol. 13, no. 557 (P-974)12. Dezember 1989 & JP,A,1 233 427 & WORLD PATENTS INDEX LATEST Week 8943, Derwent Publications Ltd., London, GB; AN 89-314190

## Beschreibung

Die Erfindung betrifft ein elektrochromes Lichtventil mit einer aktiven, dh. farblich veränderbaren, elektrochromen Schicht und einer passiven, dh. farblich im wesentlichen unverändert bleibenden, elektrochromen Schicht, zwischen denen ein Elektrolyt angeordnet und von denen jede mit einer ihr zugeordneten Elektrode verbunden ist, von denen mindestens eine transparent ist, wobei die Färbung der aktiven elektrochromen Schicht durch Aufnahme oder Abgabe von Elektronen über die ihr zugeordnete Elektrode und von Ionen eines vorbestimmten Elements oder mehrerer vorbestimmter Elemente über den Elektrolyten reversibel veränderbar ist, wobei gleichzeitig die passive elektrochrome Schicht gleichartige Ionen des Elements oder der Elemente in den Elektrolyten abgibt oder aus dem Elektrolyten aufnimmt.

Weiterhin betrifft die Erfindung ein Verfahren zum Herstellen eines solchen elektrochromen Lichtventils, in dem eine passive elektrochrome Schicht, die wenigstens eines der Elemente enthält, welche die gleichartigen Ionen liefern, erzeugt wird.

Außerdem betrifft die Erfindung besonders vorteilhafte Anwendungen dieses elektrochromen Lichtventils.

Elektrochrome Lichtventile sind beispielsweise aus FR 2 633 609 A1, GB 2 081 922 A1, WO 91/02282, EP 0 323 006 A2 und DE 40 10 285 A1 bekannt.

Elektrochrome Lichtventile der eingangs genannten Art können alternativ nach einem der beiden folgenden Mechanismen arbeiten:
(a) Der eine alternative Mechanismus besteht darin, daß sich die aktive elektrochrome Schicht dadurch einfärbt, daß sie aus der auf ihrer einen Schichtseite befindlichen Elektrode Elektronen und aus dem an ihre andere Schichtseite angrenzenden Elektrolyten positive Ionen aufnimmt, wobei die so entstehende Verarmung an positiven Ionen in dem Elektrolyten dadurch ausgeglichen wird, daß die passive elektrochrome Schicht positive Ionen des gleichen Elements oder eines anderen Elements in den Elektolyten nachliefert und gleichzeitig Elektronen über ihre Elektrode nach außen abgibt. Dieser Mechanismus läuft beispielsweise in einem elektrochromen Lichtventil ab, dessen aktive elektrochrome Schicht im wesentlichen aus Wolframtrioxid (WO₃) besteht und bei dem die Ionen zum Beispiel Lithiumionen (Li⁺) sind. Der vorstehende Mechanismus kann auch anstatt mit positiven Ionen mit negativen Ionen ablaufen, wobei dann die aktive elektrochrome Schicht beim Einfärben negative Ionen an den Elektrolyten abgibt und die passive elektrochrome Schicht negative Ionen des gleichen Elements aus dem Elektrolyten aufnimmt.
(b) Der andere alternative Mechanismus besteht darin, daß sich die aktive elektrochrome Schicht dadurch einfärbt, daß sie über ihre Elektrode Elektronen nach außen abgibt und über ihre Grenzfläche zu dem Elektrolyten gleichzeitig negative Ionen aus dem Elektrolyten aufnimmt oder positive Ionen in den Elektrolyten abgibt, wobei die dabei entstehende Ionenverarmung oder der entstehende Ionenüberschuß im Elektrolyten dadurch ausgeglichen wird, daß die passive elektrochrome Schicht gleichartige Ionen desselben Elements oder eines anderen Elements in den Elektrolyten abgibt bzw. aus dem Elektrolyten aufnimmt und hierbei über ihre Elektrode jeweils Elektronen von außen erhält. Ein Beispiel, in dem beim Einfärben von der aktiven elektrochromen Schicht positive Ionen abgegeben werden, wird in der Literatur ein System angegeben, bei welchem die aktive elektrochrome Schicht im wesentlichen aus Iridiumoxid (IrOₓ) besteht, während ein Aufnahme von negativen Ionen durch die aktive elektrochrome Schicht beim Einfärben beispielsweise in einem System erfolgt, in dem diese Schicht im wesentlichen aus Nikkeloxid (NiOₓ) besteht.

Ein elektrochromes Lichtventil der eingangs genannten Art, bei dem die aktive elektrochrome Schicht durch Aufnahme von Elektronen aus ihrer Elektrode und von positiven Ionen eines vorbestimmten Elements aus dem Elektrolyten reversibel einfärbbar ist, wobei die passive elektrochrome Schicht positive Ionen des Elements in den Elektrolyten abgibt bzw. aus dem Elektrolyten aufnimmt, ist beispielsweise aus FR 2 633 609 A1 und aus dem Aufsatz "Tauchbeschichtete CeO₂-TiO₂-Filme als transparente Gegenelektrode für transmissive elektrochrome Einrichtungen" von P. Baudry, A.C.M. Rodrigues und M.A. Aegerter, die in Proc. Vth Int. Workshop on Glasses and Ceramics from Gels, Rio de Janeiro, 6.-10. August 1989 veröffentlicht ist, sowie in nichttransparenter Ausbildung und mit zwei aktiven elektrochromen Schichten anstatt einer aktiven und einer passiven elektrochromen Schicht auch aus GB 2 081 922 A bekannt.

Bei dem in den ersten beiden vorgenannten Druckschriften beschriebenen elektrochromen Lichtventil besteht die transparente aktive elektrochrome Schicht aus einem Übergangsmetalloxid, vorzugsweise Wolframtrioxid (WO₃), während die transparente passive elektrochrome Schicht aus einem Seltene-Erde-Oxid, vorzugsweise Ceroxid (CeOᵤ mit u = 2,3) oder aus Cer-Titan-Oxid (CeO₂-TiO₂) besteht. Als transparenter Elektrolyt ist vorzugsweise ein für Lithiumionen (Li⁺) leitfähiges organisches Polymer vorgesehen. Dagegen besteht in dem nichttransparenten elektrochromen Lichtventil nach der GB 2 081 922 A die eine aktive elektrochrome Schicht aus WO₃ und die andere, ebenfalls aktive elektrochrome Schicht aus LiₓWO₃.

Die Wirkungsweise eines transparenten elektrochromen Lichtventils, das, wie in FR 2 633 609 A1 angegeben ist, insbesondere als Sonnenschutzfenster für Gebäude und Kraftfahrzeuge verwendet wird, ist wie folgt:

Die Wolframtrioxidschicht ist durch Anlegen einer elektrischen Spannung zwischen den beiden Elektroden, also das Erzeugen eines elektrischen Feldes zwischen den Elektroden einfärbbar. Dieses Einfärben geschieht dadurch, daß lichtabsorbierende Farbzentren erzeugt werden, indem in die Wolframtrioxidschicht Elektronen aus der ihr zugeordneten Elektrode injiziert werden. Um eine genügend große Anzahl von Elektronen in die Wolframtrioxidschicht injizieren und dadurch eine genügend große Anzahl von Farbzentren darin erzeugen zu können, muß die durch die Elektronen injizierte Ladung in der Wolframtrioxidschicht kompensiert werden. Das geschieht dadurch, daß gleichzeitig positive Ionen (z.B. H⁺, Li⁺ oder Na⁺), vorliegend Lithiumionen, aus dem Elektrolyten in die Wolframtrioxidschicht injiziert werden. Entsprechend müssen positive Ionen aus der passiven elektrochromen Schicht in den Elektrolyten nachgeliefert werden. Umgekehrt muß die passive elektrochrome Schicht beim Entfärben der Wolframtrioxidschicht in der Lage sein, soviel positive Ionen aufzunehmen, wie zur Entfärbung der Wolframtrioxidschicht aus dieser abgezogen werden müssen. Die vorliegend aus Ceroxid oder Cer-Titan-Oxid bestehende passive elektrochrome Schicht hat daher die Funktion eines Ionenaufnahme- und -abgabereservoirs für die positiven Ionen, wie beispielsweise die erwähnten Lithiumionen.

Hierbei wird, wie beispielsweise in FR 2 633 609 A1 angegeben ist, angenommen, daß alles Lithium reversibel zwischen der aus Wolframtrioxid bestehenden aktiven elektrochromen Schicht und der aus Ceroxid oder Cer-Titan-Oxid bestehenden passiven elektrochromen Schicht hin- und herwandern kann, d.h., daß das gesamte Lithium, welches sich in der Ceroxid- oder der Cer-Titan-Oxid-Schicht befindet, für das Einfärben der Wolframtrioxidschicht zur Verfügung steht.

Es wurde nun gefunden, daß bei einem solchen transparenten elektrochromen Lichtventil der Einfärbegrad oder die Einfärbetiefe, d.h. die Dunkelheit oder der Lichtabsorptionsgrad der Wolframtrioxidschicht, nachläßt, wenn man die Wolframtrioxidschicht einer gewissen Anzahl von Einfärbezyklen unterwirft, z.B. 2.000 Einfärbezyklen, die bei gleicher Einfärbespannung und gleicher Einfärbezeit ausgeführt werden. Und zwar läßt dann der Einfärbegrad sogar beträchtlich nach, so daß ein solches transparentes elektrochromes Lichtventil, das als lichtabsorbierende Fensterscheibe ausgeführt ist, dann in der Praxis nicht mehr brauchbar ist. Denn bei einer solchen relativ niedrigen verfügbaren Anzahl von etwa 2.000 Einfärbezyklen ist es praktisch nicht sinnvoll, eine derartige lichtabsorbierende Fensterscheibe in ein Kraftfahrzeug o.dgl. einzubauen.

Aufgabe der Erfindung ist es insbesondere, ein elektrochromes Lichtventil der eingangs genannten Art zur Verfügung zu stellen, bei dem der erreichbare Einfärbegrad trotz zunehmender Betriebs- und Lagerungsdauer im wesentlichen erhalten bleibt, also nicht wesentlich abnimmt.

Bei den Untersuchungen, die im Rahmen der vorliegenden Erfindung durchgeführt wurden, wurde überraschenderweise gefunden, daß das Element, welches die gleichartigen Ionen liefert, im Gegensatz zu der bisherigen Auffassung, wie sie z.B. in FR 2 633 609 A1 dargelegt ist, keineswegs in vollem Umfang reversibel zwischen der aktiven elektrochromen Schicht und der passiven elektrochromen Schicht hin- und herwandert, sondern daß vielmehr mit zunehmender Anzahl von Schaltzyklen nur noch ein Bruchteil der Menge dieses Elements, die in der passiven elektrochromen Schicht vorhanden ist, für die Einfärbung der aktiven elektrochromen Schicht zur Verfügung steht, während dagegen der Hauptteil dieser Menge bei der Betriebstemperatur des elektrochromen Lichtventils nur eine so geringe Beweglichkeit hat, daß er für den Einfärbungsvorgang praktisch keinen Beitrag liefert.

Die obige Aufgabe wird, ausgehend von den vorstehenden Untersuchungsergebnissen, die der Erfindung zugrundeliegen, erfindungsgemäß dadurch gelöst, daß die passive Schicht mit dem Element, das die gleichartigen Ionen liefert, oder mit den Elementen, welche die gleichartigen Ionen liefern, derart übersättigt ist, daß darin mehr von dem Element oder den Elementen enthalten ist, als zur maximalen Einfärbung der aktiven elektrochromen Schicht zur Verfügung stehen muß.

Bei den Lichtventilen der eingangs genannten Art mit einer transparenten passiven elektrochromen Schicht, wie sie z.B. in FR 2 633 609 A1 und dem weiter oben genannten Aufsatz von P. Baudry, A.C.M. Rodrigues und M.A. Aegerter beschrieben sind, war man der Auffassung, daß eine typische WO₃-Schicht, die als aktive elektrochrome Schicht vorgesehen ist, eine höhere Ionenspeicherkapazität hat als herstellbare und bekannte transparente Ce-Oxidschichten oder Ce-Ti-Oxidschichten. Daher war es ein Problem, die Li-Ionen, die für einen gewünschten Einfärbegrad der WO₃-Schicht benötigt werden, in der transparenten Ce-Oxidschicht oder Ce-Ti-Oxidschicht aufzunehmen, dh. überhaupt genug Li-Ionen darin unterzubringen, um eine ausreichend tief eingefärbte WO₃-Schicht ganz zu entfärben. Es wäre daher nach den Stand der Technik widersinnig erschienen, die Ce-Oxidschicht oder die Ce-Ti-Oxidschicht mit Li zu sättigen, vielmehr sollte sie bei vollständig eingefärbter WO₃-Schicht möglichst überhaupt kein Li enthalten.

Dagegen ist bei einem elektrochromen Lichtventil der in GB 2 081 922 A beschriebenen nichttransparenten Art, in dem anstatt einer passiven Ce-Ti-Oxidschicht eine sich farblich verändernde, also aktive LiₓWO₃-Schicht vorgesehen ist, die Aufnahme- und Abgabefähigkeit dieser Schicht für Li-Ionen in keiner Weise problematisch, weil diese Schicht nicht durchsichtig sein und farblich nicht unverändert bleiben muß, also nicht passiv sein muß. Daher kann diese LiₓWO₃-Schicht ohne weiteres so dimensioniert werden, daß sie in der Lage ist, für den Einfärbe- und Entfärbeprozeß der aktiven elektrochromen WO₃-Schicht ausreichend Li-Ionen abzugeben und aufzunehmen, und demgemäß konnte die LiₓWO₃-Schicht in dem zwei zusammenwirkende aktive elektrochrome Schichten aufweisenden Lichtventil nach der GB 2 081 922 A im Gegensatz zu einem Lichtventil mit einer aktiven und einer passiven elektrochromen Schicht problemlos so dimensioniert werden, daß sie ein mehr als ausreichendes Reservoir von Li-Ionen bildet.

Eine Übersättigung im Sinne der Erfindung bedeutet, daß die passive elektrochrome Schicht eine Konzentration an dem Element, welches die gleichartigen Ionen liefert, oder an den Elementen, welche die gleichartigen Ionen liefern, hat, aufgrund deren die passive elektrochrome Schicht wesentlich mehr von dem Element oder den Elementen enthält, als Ionen von demselben oder denselben beim Einfärben oder Entfärben der aktiven elektrochromen Schicht durch die passive elektrochrome Schicht bei Betriebstemperatur und vertretbarer Schaltzeit an den Elektrolyten abgegeben oder von dem Elektrolyten aufgenommen werden.

Bei Untersuchungen, die an erfindungsgemäßen elektrochromen Lichtventilen, bei denen die aktive elektrochrome Schicht aus Wolframtrioxid bestand und deren passive elektrochrome Schicht eine mit Lithium bei der Betriebstemperatur des elektrochromen Lichtventils übersättigte Ce_{y}Ti_{z}Oᵤ-Schicht war, wurde festgestellt, daß dann in der Ce_{y}Ti_{z}Oᵤ-Schicht etwa zweimal bis dreimal soviel Lithium vorhanden ist, wie zur maximalen Einfärbung der Wolframtrioxidschicht zur Verfügung stehen muß. Aufgrund dieser Untersuchungsergebnisse wird angenommen, daß bei dem vorstehenden System nur etwa die Hälfte bis etwa ein Drittel der in der Ce_{y}Ti_{z}Oᵤ-Schicht vorhandenen Menge an Lithium bei der Betriebstemperatur eine ausreichende Beweglichkeit hat, während die Beweglichkeit der restlichen Menge von etwa der Hälfte bis etwa zwei Dritteln des Lithiums so gering ist, daß sie für die in der Praxis relevanten Einfärbungsvorgänge keinen merklichen Beitrag liefert.

Weiter wurde bei den Untersuchungen, die im Rahmen der Erfindung durchgeführt worden sind, überraschenderweise festgestellt, daß bei Verwendung von Indium-Zinn-Oxid-Schichten (ITO-Schichten) oder Zinn-Oxid-Schichten als transparente Elektroden, diese Schichten die zum Einfärben der aktiven elektrochromen Schicht dienenden Ionen, wie beispielsweise Li-Ionen, aufnehmen und nicht wieder vollständig abgeben.

Daher zeichnet sich eine besonders bevorzugte Ausführungsform eines elektrochromen Lichtventils nach der Erfindung, bei dem die der aktiven elektrochromen Schicht zugeordnete Elektrode und/oder die der passiven elektrochromen Schicht zugeordnete Elektrode aus Indium-Zinn-Oxid oder Zinn-Oxid besteht oder Indium-Zinn-Qxid oder Zinn-Oxid enthält, erfindungsgemäß dadurch aus, daß das Indium-Zinn-Oxid oder das Zinn-Oxid der der aktiven elektrochromen Schicht zugeordneten Elektrode und/oder das Indium-Zinn-Oxid oder das Zinn-Oxid der der passiven elektrochromen Schicht zugeordneten Elektrode mit dem Element, das die gleichartigen Ionen liefert, oder mit den Elementen, welche die gleichartigen Ionen liefern, wie beispielsweise mit Lithium und/oder Natrium, gesättigt ist.

Hierbei bedeutet "gesättigt", daß die Schicht, welche die jeweilige Elektrode bildet, z.B. eine ITO-Schicht, soviel von dem in Frage stehenden Element, z.B. Li, oder den in Frage stehenden Elementen, z.B. Li und Na, enthält, daß diese Schicht während des Einfärbe- oder Entfärbevorgangs der aktiven elektrochromen Schicht im wesentlichen keines der in Frage stehenden Elemente, z.B. kein Li und/oder kein Na, aufnimmt.

Das erfindungsgemäße Verfahren zum Herstellen eines elektrochromen Lichtventils zeichnet sich dadurch aus, daß die passive elektrochrome Schicht mit dem Element, das die gleichartigen Ionen liefert, oder mit mehreren Elementen, welche die gleichartigen Ionen liefern, übersättigt wird.

Eine Ausführungsform des erfindungsgemäßen Verfahrens besteht darin, daß zur Bildung der passiven elektrochromen Schicht zunächst eine Trägersubstanzschicht für ein Element, das die gleichartigen Ionen liefert, oder für mehrere Elemente, welche die gleichartigen Ionen liefern, hergestellt wird, wobei diese Trägersubstanzschicht das vorgenannte Element oder die vorstehend genannten Elemente nicht enthält oder hiermit nicht übersättigt ist, und daß diese Trägersubstanzschicht mit dem Element oder den Elementen bis zur Übersättigung dotiert wird.

Eine Ausführungsform dieses Dotierungsverfahrens besteht darin, daß die Trägersubstanzschicht, welche das vorgenannte Element oder die vorstehend erwähnten Elemente nicht oder nicht in Übersättigung enthält, bei einer wesentlich über der Betriebstemperatur des Lichtventils liegenden Temperatur mit diesem Element oder diesen Elementen in einem Elektrolyten so lange dotiert wird, bis keine wesentliche Aufnahme an dem Element oder den Elementen mehr pro Zeiteinheit erfolgt. Das Dotieren wird vorzugsweise vor dem Zusammenbau des Lichtventils durchgeführt.

Diese Temperatur, bei der die passive elektrochrome Schicht mit dem Element, welches die positiven Ionen liefert, gesättigt bzw. dotiert wird, liegt, wenn die Betriebstemperatur des Lichtventils die Umgebungstemperatur ist, vorzugsweise im Temperaturbereich von 50°C bis 150°C, ist also bevorzugt ein Mehrfaches der Betriebstemperatur, bezogen auf eine in positiven Celsiusgraden angegebene Betriebstemperatur.

Hierbei ist der Elektrolyt vorzugsweise so stark mit dem Element, welches die gleichartigen Ionen liefert, dotiert, daß er nicht als diejenige Komponente wirken kann, welche die Lieferung der positiven Ionen begrenzt.

Eine bevorzugte Ausführungsform des erfindungsgemäßen elektrochromen Lichtventils und des Verfahrens zu seiner Herstellung zeichnet sich dadurch aus, daß das Element, welches die positiven Ionen liefert, Lithium ist, und/oder daß die passive elektrochrome Schicht aus Ceroxid besteht oder Ceroxid enthält und mit Li⁺ übersättigt ist, insbesondere aus CeTiOᵤ besteht oder CeTiOᵤ enthält, und/oder daß die aktive elektrochrome Schicht aus einem Übergangsmetalloxid besteht oder ein Übergangsmetalloxid enthält, insbesondere aus WOᵤ besteht oder WOᵤ enthält, wobei u im Bereich von 2-3 liegt, vorzugsweise 2,7 ist.

Die ionenaktive Substanz (Trägersubstanz + Element, welches die vorgenannten gleichartigen Ionen liefert) der passiven elektrochromen Schicht besteht bevorzugt im wesentlichen aus LiₓCe_{y}Ti_{z}Oᵤ, wobei das atomare Verhältnis von Lithium zu Cer plus Titan, d.h. x:(y+z), vorzugsweise etwa zwischen 0,2 und 1 beträgt, und/oder im wesentlichen aus NaₓCe_{y}Ti_{z}Oᵤ, wobei das atomare Verhältnis von Natrium zu Cer plus Titan, d.h. x:(y+z), vorzugsweise ebenfalls etwa zwischen 0,2 und 1 beträgt. Eine derartige passive elektrochrome Schicht mit Liₓ₁Ce_{y1}Ti_{z1}Oᵤ₁ und/oder Naₓ₂Ce_{y2}Ti_{z2}Oᵤ₂ (bevorzugt sind auch hier die obigen atomaren Verhältnisse von Lithium zu Cer und Natrium zu Cer vorhanden) läßt sich vorzugsweise in Verbindung mit den verschiedensten aktiven elektrochromen Schichten verwenden, beispielsweise in Verbindung mit den in der vorliegenden Beschreibung und in den Patentansprüchen angegebenen aktiven elektrochromen Schichten.

Bei einem erfindungsgemäß hergestellten elektrochromen Lichtventil, das eine Wolframtrioxidschicht als aktive elektrochrome Schicht und eine CeTiOᵤ-Schicht als passive elektrochrome Schicht mit Lithium oder Natrium als dem Element, welches die gleichartigen Ionen liefert, besitzt, hat in der CeTiOᵤ-Schicht, wie sich aus Ergebnissen von Untersuchungen ergab, die im Rahmen der Erfindung durchgeführt wurden, eine wesentlich höhere Lithium- oder Natriumkonzentration, als beim Normalbetrieb, d.h. bei der jeweiligen Betriebstemperatur, z.B. bei Umgebungstemperatur, zur geforderten bzw. ausreichenden Einfärbung der Wolframtrioxidschicht benötigt wird.

Dadurch konnte, wie längerdauernde Tests gezeigt haben, das Nachlassen des erreichbaren Einfärbungsgrads mit zunehmender Betriebs- und Lagerungsdauer des elektrochromen Lichtventils ausgeschaltet werden.

Als Elektrolyt wird besonders Polyvinylbutyralfolie bzw. Polyvinylbutyral, das mit dem Element, welches die positiven Ionen liefert, dotiert ist, bevorzugt. Polyvinylbutyral eignet sich besonders gut als Ionenleiter und weist eine hohe chemische und mechanische Stabilität auch bei Anwendung unter Sonneneinstrahlung auf, unter anderem tritt kein Gelbwerden auf. Wenn das Polyvinylbutyral mit Lithium als dem Element, welches die positiven Ionen liefert, dotiert wird, geschieht die Dotierung vorzugsweise so, daß Lithiumperchlorat (LiClO₄) im Polyvinylbutyrat gelöst ist.

Ein weiterer bevorzugter Elektrolyt des erfindungsgemäßen elektrochromen Lichtventils ist ein Flüssigkristall oder ein flüssigkristallines Polymer mit senkrecht zur Schichtebene bevorzugter Ionenleitfähigkeit. Dieser Flüssigkristall oder das flüssigkristalline Polymer ist bevorzugt vom nematischen oder diskotischen Typ.

Die Dicke der aktiven und/oder der passiven elektrochromen Schicht liegt vorzugsweise zwischen 0,05 und 10 µm.

Obgleich es, wie oben angegeben, besonders bevorzugt wird, daß die passive elektrochrome Schicht aus CeOᵤ oder CeTiOᵤ besteht oder CeOᵤ oder CeTiOᵤ enthält, kann sie doch grundsätzlich aus einem oder mehreren Seltene-Erde-Oxiden bestehen oder ein oder mehrere Seltene-Erde-Oxide enthalten. Bevorzugte Ausbildungen der passiven elektrochromen Schicht unter Verwendung von Ceroxid sind insbesondere solche, bei denen die passive elektrochrome Schicht eine Mischung aus Ceroxid und 10 Mol-% bis 90 Mol-%, vorzugsweise 50 Mol-%, Titan(II)-, Titan(III)- oder Titan(IV)-Oxid ist oder bei denen die passive elektrochrome Schicht eine Mischung aus Ceroxid und 10 Mol-% bis 90 Mol-% Wolframoxid, vorzugsweise 20 Mol-% Wolframoxid ist, wobei sich die Mol-Prozent-Angaben auf das Verhältnis der Metalle und nicht auf das Verhältnis der Oxide beziehen.

Obwohl Lithium und/oder Natrium als die Elemente, welche die gleichartigen Ionen liefern, bevorzugt werden, können auch andere Elemente, die positive oder negative Ionen liefern, verwendet werden, wie z.B. Wasserstoff (H⁺-Ionen) oder Kalium (K⁺-Ionen).

In diesem Zusammenhang sei angegeben, daß das erfindungsgemäße Verfahren auch so ausgeführt werden kann, daß die passive elektrochrome Schicht vor dem Zusammenbau des Lichtventils bei einer wesentlich über der Betriebstemperatur des Lichtventils liegenden Temperatur mit einem oder mehreren Elementen gesättigt wird, von denen eines das vorbestimmte Element ist, welches die positiven Ionen liefert, vorzugsweise Lithium und/oder Natrium.

Außerdem kann das erfindungsgemäße Verfahren so ausgeführt werden, daß die aktive elektrochrome Schicht vor dem Zusammenbau des Lichtventils bis zu einem vorbestimmten, unterhalb der Sättigung liegenden Grad mit dem Element, welches die gleichartigen Ionen liefert, dotiert wird. Auf diese Weise wird in Verbindung mit der Übersättigung der passiven elektrochromen Schicht und einer Dotierung des Elektrolyten mit dem vorgenannten Element insgesamt eine optimale Dotierung des elektrochromen Lichtventils nach der Erfindung mit dem Element, das die gleichartigen Ionen liefert, erreicht.

Generell gesagt, besteht die passive elektrochrome Schicht oder deren ionenaktive Substanz im wesentlichen aus dem Element, welches die oben angegebenen gleichartigen Ionen liefert, oder mehreren derartigen Elementen, und einer Trägersubstanz für dieses Element oder diese Elemente, wobei die Trägersubstanz im allgemeinen deswegen benötigt wird, weil das betreffende Element oder die betreffenden Elemente, wie beispielsweise Lithium und/oder Natrium, allein als elektrochrome Schicht nicht stabil und nicht transparent ist bzw. sind. Diese Trägersubstanz ist bevorzugt ein amorphes oder polykristallines Oxid oder Mischoxid, das eine ausreichende Ionenspeicherkapazität und Ionenbeweglichkeit für das die gleichartigen Ionen liefernde Element oder für die die gleichartigen Ionen liefernden Elemente sicherstellt.

Während bei dem obigen Verfahren zunächst eine Schicht aus der Trägersubstanz hergestellt wird und danach ein Dotieren dieser Schicht mit dem in Frage stehenden Element oder den in Frage stehenden Elementen erfolgt, besteht ein alternatives Verfahren der Erfindung zum Herstellen der passiven elektrochromen Schicht des erfindungsgemäßen Lichtventils darin, daß die passive elektrochrome Schicht in einem einzigen Verfahrensschritt durch gleichzeitigen Aufbau derselben aus dem Element oder den Elementen und der Trägersubstanz für dieses Element oder diese Elemente hergestellt wird, indem dieses Element oder diese Elemente beim Aufbau der passiven elektrochromen Schicht in einer solchen Menge in diese passive elektrochrome Schicht eingebaut wird bzw. werden, daß die passive elektrochrome Schicht während ihres Aufbaus mit dem genannten Element oder den genannten Elementen übersättigt wird.

Hierbei kann bei einer Ausführungsform dieses Verfahrens die passive elektrochrome Schicht durch Sputtern oder reaktives Sputtern von einem Target hergestellt werden, welches die Ausgangssubstanzen für die Trägersubstanz und das die gleichartigen Ionen liefernde Element oder die die gleichartigen Ionen liefernden Elemente enthält.

Eine bevorzugte Ausgestaltung dieser Art des Verfahrens besteht darin, daß das Target aus Cer und Titan, aus denen ein amorphes oder polykristallines Oxid oder Mischoxid beim reaktiven Sputtern entsteht, und aus dem in Frage stehenden Element oder den in Frage stehenden Elementen, beispielsweise Lithium und/oder Natrium, besteht, so daß also zum Beispiel für den obigen Fall einer Liₓ₁Ce_{y1}Ti_{z1}Oᵤ₁- und/oder Naₓ₂Ce_{y2}Ti_{z2}Oᵤ₂-Schicht ein reaktives Sputtern von einem metallischen Liₓ₁Ce_{y1}Ti_{z1}- und/oder Naₓ₂Ce_{y2}Ti_{z2}-Target in sauerstoffhaltiger Atmosphäre oder ein neutrales Sputtern von einem entsprechenden Oxidtarget erfolgt.

Eine andere Ausführungsform des obigen erfindungsgemäßen Verfahrens, bei dem die übersättigte passive elektrochrome Schicht in einem einzigen Verfahrensschritt hergestellt wird, besteht nach der Erfindung darin, daß die passive elektrochrome Schicht durch gleichzeitiges Aufdampfen der Trägersubstanzschicht und des später die gleichartigen Ionen liefernden Elements oder der später die gleichartigen Ionen liefernden Elemente hergestellt wird. Ein Beispiel dieser Art der Ausführung des Verfahrens besteht darin, daß ein simultanes Verdampfen von Verbindungen der Metalle, zum Beispiel von Cer und/oder Titan, aus denen die Trägersubstanz aufgebaut wird, und des in Frage stehenden Elements oder der in Frage stehenden Elemente erfolgt.

Schließlich besteht eine weitere Art der Ausführungsform des Verfahrens nach der Erfindung zur Herstellung der oben angegebenen übersättigten passiven elektrochromen Schicht darin, daß erfindungsgemäß die passive elektrochrome Schicht aus mehreren übereinander und nacheinander hergestellten Einzelschichten, die aus einer Trägersubstanz oder mehreren Trägersubstanzen und/oder dem Element oder den Elementen bestehen oder die vorstehend genannten Bestandteile enthalten, aufgebaut wird. Hierbei können insbesondere abwechselnd Einzelschichten, die aus Trägersubstanz bestehen oder Trägersubstanz enthalten, und Einzelschichten, die aus dem Element oder den Elementen bestehen oder das Element oder die Elemente enthalten, übereinander erzeugt werden.

Die vorgenannten Einzelschichten können sowohl durch neutrales Sputtern und/oder reaktives Sputtern als auch durch Aufdampfen erzeugt werden.

Vorzugsweise wird das elektrochrome Lichtventil nach der Erfindung in der Form von in ihrer Lichtdurchlässigkeit durch Absorption und/oder Reflexion steuerbaren Fensterscheiben, optischen Komponenten und Brillengläsern angewandt. Weitere Anwendungen sind die Anwendung als steuerbarer Absorber und/oder Reflektor im Solarbereich oder die Anwendung als elektrisch aufladbarer Energiespeicher. Eine noch andere Anwendung des erfindungsgemäßen elektrochromen Lichtventils ist diejenige als elektrisch abstimmbares Medium im Resonator eines Fabry-Perrot-Interferometers, z.B. eines solchen, wie es aus der GB 2 219 099 A grundsätzlich bekannt ist.

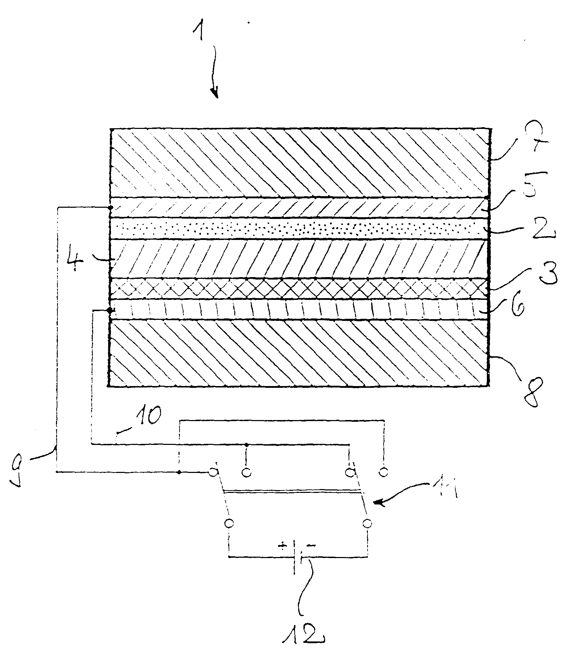

Die Erfindung sei nachstehend anhand einer in der einzigen Figur der Zeichnung im Querschnitt schematisch dargestellten, bevorzugten Ausführungsform näher erläutert, wobei darauf hingewiesen sei, daß die Zeichnung aus Darstellungsgründen nicht maßstabsgerecht ausgeführt ist.

Das in der Zeichnung dargestellte elektrochrome Lichtventil 1 umfaßt eine aktive elektrochrome Schicht 2, die vorzugsweise aus WOᵤ besteht, wobei u im Bereich von 2-3 liegt, vorzugsweise 2,7 ist, und eine passive elektrochrome Schicht 3, die vorzugsweise aus Ce_{y}Ti_{z}Oᵤ besteht oder CeTiOᵤ enthält, wobei u im Bereich von 2-3,5 liegt, vorzugsweise 3,0 ist. Diese passive elektrochrome Schicht 3 ist bei der Betriebstemperatur des elektrochromen Lichtventils 1 mit einem Element, welches gleichartige Ionen liefert, wie sie zur Einfärbung der aktiven elektrochromen Schicht 3 verwendet werden, vorzugsweise mit Lithium, übersättigt, wobei diese Übersättigung eine mehrfache Übersättigung sein kann.

Zwischen der aktiven elektrochromen Schicht 2 und der passiven elektrochromen Schicht 3 ist ein diese beiden Schichten miteinander verbindender Elektrolyt 4 vorgesehen, der ein Ionenleiter für die vorgenannten gleichartigen Ionen ist, die vorliegend positive Ionen sind, z.B. Lithiumionen. Vorzugsweise ist dieser Elektrolyt Polyvinylbutyral, das mit dem Element, welches die positiven Ionen liefert, vorliegend vorzugsweise Lithium, dotiert ist.

Auf der dem Elektrolyten 4 abgewandten Seite der aktiven elektrochromen Schicht 2 ist eine erste Elektrode 5 vorgesehen, und auf der dem Elektrolyten 4 abgewandten Seite der passiven elektrochromen Schicht 3 ist eine zweite Elektrode 6 vorgesehen.

Auf den Außenseiten dieses Schichtaufbaus befinden sich eine erste Trägerschicht 7 und eine zweite Trägerschicht 8, die bevorzugt aus Glas und/oder Kunststoff bestehen.

Die entfärbte aktive elektrochrome Schicht 2, die passive elektrochrome Schicht 3, der Elektrolyt 4, die erste und zweite Elektrode 5, 6 und die erste und zweite Trägerschicht 7, 8 sind transparent, d.h. sie sind für Licht in einem vorbestimmten Wellenlängenbereich oder in mehreren vorbestimmten Wellenlängenbereichen durchlässig. In der vorliegenden Ausführungsform sind die Elektroden 5, 6 als Indium-Zinn-Oxid-Schichten ausgebildet, die mit dem gleichartige Ionen liefernden Element, vorzugsweise mit Lithium, gesättigt sind.

Die beiden Elektroden 5 und 6 sind über eine erste und zweite Leitung 9 und 10 und einen doppelpoligen Umschalter 11 mit einer Spannungsquelle 12 zum Einfärben und Entfärben der aktiven elektrochromen Schicht 2 verbunden, wobei zum Entfärben oder Einfärben auch ein Kurzschließen der beiden Elektroden 5 und 6 vorgesehen sein kann.

Die beschriebene Ausführungsform kann gegebenenfalls für nichttransmissive Anwendungen (z.B. steuerbare Absorber oder Reflektoren) so modifiziert werden, daß eine oder mehrere der Komponenten 2 bis 8 in einem oder mehreren Wellenlängenbereich(en) nicht transparent sind.

## Patentansprüche

1. Elektrochromes Lichtventil (1) mit einer aktiven, dh. farblich veränderbaren, elektrochromen Schicht (2) und einer passiven, dh. farblich im wesentlichen unverändert bleibenden, elektrochromen Schicht (3), zwischen denen ein Elektrolyt (4) angeordnet und von denen jede mit einer ihr zugeordneten Elektrode (5, 6) verbunden ist, von denen mindestens eine transparent ist, wobei die Färbung der aktiven elektrochromen Schicht (2) durch Aufnahme oder Abgabe von Elektronen über die ihr zugeordnete Elektrode (5) und von Ionen eines vorbestimmten Elements oder mehrerer vorbestimmter Elemente über den Elektrolyten (4) reversibel veränderbar ist, wobei gleichzeitig die passive elektrochrome Schicht (3) gleichartige Ionen des Elements oder der Elemente in den Elektrolyten (4) abgibt oder aus dem Elektrolyten (4) aufnimmt, dadurch **gekennzeichnet**, daß die passive elektrochrome Schicht (3) mit dem Element, das die gleichartigen Ionen liefert, oder mit den Elementen, welche die gleichartigen Ionen liefern, derart übersättigt ist, daß darin mehr von dem Element oder den Elementen enthalten ist, als zur maximalen Einfärbung der aktiven elektrochromen Schicht (2) zur Verfügung stehen muß.

2. Elektrochromes Lichtventil nach Anspruch 1, wobei die passive elektrochrome Schicht (3) mit dem Element, welches die gleichartigen Ionen liefert, oder mit den Elementen, welche die gleichartigen Ionen liefern, mehrfach übersättigt ist.

3. Elektrochromes Lichtventil nach Anspruch 1 oder 2, wobei das Element, welches die gleichartigen Ionen liefert, Lithium oder Natrium ist.

4. Elektrochromes Lichtventil nach Anspruch 1 oder 2, wobei die Elemente, welche die gleichartigen Ionen liefern, Lithium und Natrium sind.

5. Elektrochromes Lichtventil nach Anspruch 1, 2, 3 oder 4, wobei die passive elektrochrome Schicht (3) aus Ceroxid besteht oder Ceroxid enthält.

6. Elektrochromes Lichtventil nach Anspruch 5, wobei die passive elektrochrome Schicht (3) eine Mischung aus Cer(III)- und/oder Cer(IV)-Oxid und 10 Mol-% bis 90 Mol-%, vorzugsweise 50 Mol-%, Titan(II)-, Titan(III)- oder Titan(IV)-Oxid ist, wobei sich die Mol-%-Angaben auf die Metallanteile Ce und Ti beziehen.

7. Elektrochromes Lichtventil nach Anspruch 5, wobei die passive elektrochrome Schicht (3) eine Mischung aus Cer(III)- und/oder Cer(IV)-Oxid und 10 Mol-% bis 90 Mol-% Wolframoxid, vorzugsweise 20 Mol-% Wolframoxid, ist, wobei sich die Mol-%-Angaben auf die Metallanteile Ce und W beziehen.

8. Elektrochromes Lichtventil nach einem der Ansprüche 1 bis 7, wobei die aktive elektrochrome Schicht (2) aus einem Übergangsmetalloxid oder mehreren Übergangsmetalloxiden besteht oder ein Übergangsmetalloxid oder mehrere Übergangsmetalloxide enthält.

9. Elektrochromes Lichtventil nach Anspruch 8, wobei das Übergangsmetalloxid WOᵤ ist, wobei u im Bereich von 2 bis 3 liegt, vorzugsweise 2,7 ist.

10. Elektrochromes Lichtventil nach einem der Ansprüche 1 bis 9, wobei die Dicke der aktiven und/oder der passiven elektrochromen Schicht (2, 3) zwischen 0,05 und 10 µm beträgt.

11. Elektrochromes Lichtventil nach einem der Ansprüche 1 bis 10, wobei der Elektrolyt (4) Polyvinylbutyral ist, das mit dem Element, welches die positiven Ionen liefert, oder mit den Elementen, welche die positiven Ionen liefern, dotiert ist.

12. Elektrochromes Lichtventil nach einem der Ansprüche 1 bis 10, wobei der Elektrolyt (4) ein Flüssigkristall oder ein flüssigkristallines Polymer mit senkrecht zur Schichtebene bevorzugter Ionenleitfähigkeit ist.

13. Elektrochromes Lichtventil nach Anspruch 12, wobei der Flüssigkristall oder das flüssigkristalline Polymer vom nematischen oder diskotischen Typ ist.

14. Elektrochromes Lichtventil nach einem der Ansprüche 1 bis 13, wobei die der aktiven elektrochromen Schicht (2) zugeordnete Elektrode (5) und/oder die der passiven elektrochromen Schicht (3) zugeordnete Elektrode (6) aus Indium-Zinn-Oxid oder Zinn-Oxid besteht oder Indium-Zinn-Oxid oder Zinn-Oxid enthält, und daß die der aktiven elektrochromen Schicht (2) zugeordnete Elektrode (5) und/oder daß die der passiven elektrochromen Schicht (3) zugeordnete Elektrode (6) mit dem Element, das die gleichartigen Ionen liefert, oder mit den Elementen, welche die gleichartigen Ionen liefern, gesättigt ist.

15. Elektrochromes Lichtventil nach Anspruch 14, wobei die der aktiven elektrochromen Schicht (2) zugeordnete Elektrode (5) und/oder die der passiven elektrochromen Schicht (3) zugeordnete Elektrode (6) mit Lithium und/oder Natrium gesättigt ist.

16. Verfahren zur Herstellung eines elektrochromen Lichtventils (1) nach einem der Ansprüche 1 bis 15, in dem eine passive elektrochrome Schicht (3), die wenigstens eines der Elemente enthält, welche die gleichartigen Ionen liefern, erzeugt wird, dadurch **gekennzeichnet,** daß die passive elektrochrome Schicht (3) mit dem Element, das die gleichartigen Ionen liefert, oder mit mehreren Elementen, welche die gleichartigen Ionen liefern, übersättigt wird.

17. Verfahren nach Anspruch 16, wobei zur Bildung der übersättigten passiven elektrochromen Schicht (3) zunächst eine Trägersubstanzschicht für ein Element, das die gleichartigen Ionen liefert, oder für mehrere Elemente, welche die gleichartigen Ionen liefern, hergestellt wird, die das Element oder die Elemente nicht enthält oder hiermit noch nicht übersättigt ist, und daß diese Trägersubstanzschicht mit dem Element oder den Elementen bis zur Übersättigung dotiert wird.

18. Verfahren nach Anspruch 17, wobei die Trägersubstanzschicht, welche das Element oder die Elemente nicht oder nicht in Übersättigung enthält, bei einer wesentlich über der Betriebstemperatur des Lichtventils (1) liegenden Temperatur mit dem Element oder den Elementen in einem Elektrolyten so lange dotiert wird, bis keine wesentliche Aufnahme an dem Element oder den Elementen mehr pro Zeiteinheit erfolgt.

19. Verfahren nach Anspruch 17 oder 18, wobei das Dotieren vor dem Zusammenbau des Lichtventils (1) durchgeführt wird.

20. Verfahren nach Anspruch 17, wobei die Trägersubstanzschicht, welche das Element oder die Elemente nicht oder nicht in Übersättigung enthält, durch Beschichten mit dem Element oder mit den Elementen und Eindiffundieren dotiert wird, wobei das Eindiffundieren bei einer wesentlich über der Betriebstemperatur des Lichtventils (1) liegenden Temperatur durchgeführt wird.

21. Verfahren nach Anspruch 16, wobei die übersättigte passive elektrochrome Schicht (3) in einem einzigen Verfahrensschritt durch gleichzeitigen Aufbau derselben aus dem Element oder den Elementen und einer Trägersubstanz für dieses Element oder diese Elemente hergestellt wird, indem das Element oder die Elemente beim Aufbau der Schicht (3) in einer solchen Menge in diese Schicht (3) eingebaut wird bzw. werden, daß die Schicht (3) während ihres Aufbaus mit dem Element oder den Elementen übersättigt wird.

22. Verfahren nach Anspruch 21, wobei die passive elektrochrome Schicht (3) durch Sputtern oder reaktives Sputtern von einem Target hergestellt wird, welches die Ausgangssubstanzen für die Trägersubstanz und das Element oder die Elemente enthält.

23. Verfahren nach Anspruch 21, wobei die passive elektrochrome Schicht (3) durch gleichzeitiges Aufdampfen der Trägersubstanzschicht und des Elements oder der Elemente hergestellt wird.

24. Verfahren nach Anspruch 16, wobei die passive elektrochrome Schicht (3) aus mehreren übereinander und nacheinander hergestellten Einzelschichten aus einer Trägersubstanz oder mehreren Trägersubstanzen und/oder dem Element oder den Elementen aufgebaut wird.

25. Verfahren nach Anspruch 24, wobei abwechselnd Einzelschichten aus Trägersubstanz(en) und Einzelschichten aus dem Element oder den Elementen übereinander erzeugt werden.

26. Verfahren nach Anspruch 24 oder 25, wobei die Einzelschichten durch Sputtern und/oder reaktives Sputtern erzeugt werden.

27. Verfahren nach Anspruch 24 oder 25, wobei die Einzelschichten durch Aufdampfen erzeugt werden.

28. Verfahren nach einem der Ansprüche 17 bis 27, wobei die Trägersubstanz ein amorphes oder polykristallines Oxid oder Mischoxid ist oder enthält.

29. Verfahren nach Anspruch 28, wobei das amorphe oder polykristalline Oxid Ceroxid oder Titanoxid ist.

30. Verfahren nach Anspruch 28, wobei das amorphe oder polykristalline Mischoxid Ce_{y}Ti_{z}Oᵤ ist.

31. Verfahren nach Anspruch 28, wobei das Mischoxid eine Mischung aus Cer(III)- und/oder Cer(IV)-Oxid und 10 Mol-% bis 90 Mol-%, vorzugsweise 50 Mol-%, Titan(II)-, Titan(III)- oder Titan(IV)-Oxid ist, wobei sich die Mol-%-Angaben auf die Metallanteile Ce und Ti beziehen.

32. Verfahren nach Anspruch 28, wobei das Mischoxid eine Mischung aus Cer(III)- und/oder Cer(IV)-Oxid und 10 Mol-% bis 90 Mol-% Wolframoxid, vorzugsweise 20 Mol-% Wolframoxid, ist, wobei sich die Mol-%-Angaben auf die Metallanteile Ce und W beziehen.

33. Verfahren nach einem der Ansprüche 16 bis 32, wobei das Element Lithium oder Natrium ist.

34. Verfahren nach einem der Ansprüche 16 bis 32, wobei die Elemente Lithium und Natrium sind.

35. Verfahren nach Anspruch 22 oder 26 in Verbindung mit einem der Ansprüche 28 bis 34, wobei das Target ein metallisches Target ist, welches Cer und/oder Titan sowie Lithium und/oder Natrium enthält oder hieraus besteht und das reaktive Sputtern in einer sauerstoffhaltigen Atmosphäre durchgeführt wird.

36. Verfahren nach Anspruch 35, wobei das Target Liₓ₁Ce_{y1}Ti_{z1} und/oder Naₓ₂Ce_{y2}Ti_{z2} enthält oder hieraus besteht.

37. Verfahren nach Anspruch 22, wobei das Target Ceroxid und/oder Titanoxid sowie Lithium und/oder Natrium enthält oder hieraus besteht.

38. Verfahren nach Anspruch 37, wobei das Target Liₓ₁Ce_{y1}Ti_{z1}Oᵤ₁ und/oder Naₓ₂Ce_{y2}Ti_{z2}Oᵤ₂ enthält oder hieraus besteht.

39. Verfahren nach einem der Ansprüche 16 bis 38, wobei die passive elektrochrome Schicht (3), vorzugsweise vor dem Zusammenbau des Lichtventils (1), mit einem beliebigen anderen Element oder mit mehreren beliebigen anderen Elementen versehen, insbesondere gesättigt und/oder in der angegebenen Weise dotiert, wird.

40. Verfahren nach einem der Ansprüche 16 bis 39, wobei die aktive elektrochrome Schicht (2), vorzugsweise vor dem Zusammenbau des Lichtventils (1), bis zu einem vorbestimmten, unterhalb der Sättigungsgrenze liegenden Grad mit einem Element, das die gleichartigen Ionen liefert, oder mit mehreren Elementen, welche die gleichartigen Ionen liefern, versehen, insbesondere dotiert, wird.

41. Verfahren nach einem der Ansprüche 16 bis 40 zur Herstellung eines elektrochromen Lichtventils nach Anspruch 14 oder 15, wobei die der aktiven elektrochromen Schicht (2) zugeordnete Elektrode (5) und/oder die der passiven elektrochromen Schicht (3) zugeordnete Elektrode (6) mit dem Element, das die gleichartigen Ionen liefert, oder mit den Elementen, welche die gleichartigen Ionen liefern, gesättigt wird.

42. Verfahren nach Anspruch 41, wobei die der aktiven elektrochromen Schicht (2) zugeordnete Elektrode (5) und/oder die der passiven elektrochromen Schicht (3) zugeordnete Elektrode (6) mit Lithium und/oder Natrium gesättigt wird.

43. Anwendung des nach einem der Ansprüche 1 bis 15 aufgebauten oder nach einem der Ansprüche 16 bis 42 hergestellten elektrochromen Lichtventils (1) als in ihrer Lichtdurchlässigkeit durch Absorption und/oder Reflexion steuerbare Fensterscheiben, optische Komponenten und Brillengläser.

44. Anwendung des nach einem der Ansprüche 1 bis 15 aufgebauten oder nach einem der Ansprüche 16 bis 42 hergestellten Lichtventils (1) als steuerbarer Absorber und/oder Reflektor im Solarbereich oder als elektrisch aufladbarer Energiespeicher.

45. Andwendung des nach einem der Ansprüche 1 bis 15 aufgebauten oder nach einem der Ansprüche 16 bis 42 hergestellten elektrochromen Lichtventils (1) als elektrisch abstimmbares Medium im Resonator eines Fabry-Perrot-Interferometers.

## Claims

1. Electrochromic light valve (1) with an active electrochromic film, i.e. one whose colour can change (2), and a passive electrochromic film, i.e. one whose colour essentially remains unchanged (3), between which an electrolyte (4) is arranged and each of which is connected to an associated electrode (5, 6), at least one of which is transparent, the coloration of the active electrochromic film (2) being reversibly changeable by acceptance or donation of electrons via the associated electrode (5) and of ions of a particular element or several particular elements via the electrolyte (4), the passive electrochromic film (3) simultaneously donating ions of the species concerned of the element or the elements to the electrolyte (4) or accepting them from the electrolyte (4), characterized in that the passive electrochromic film (3) is supersaturated with the element that provides the ions of the species concerned or with the elements that provide the ions of the species concerned in such a manner, that the film (3) contains more of the element or elements, as must be available for the maximum coloration of the active electrochromic film (2).

2. Electrochromic light valve according to Claim 1, characterized in that the passive electrochromic film (3) is multiply supersaturated with the element that provides the ions of the species concerned or with the elements that provide the ions of the species concerned.

3. Electrochromic light valve according to Claim 1 or 2, characterized in that the element which provides the ions of the species concerned is lithium or sodium.

4. Electrochromic light valve according to Claim 1 or 2, characterized in that the elements which provide the ions of the species concerned are lithium and sodium.

5. Electrochromic light valve according to Claim 1, 2, 3 or 4, characterized in that the passive electrochromic film (3) comprises cerium oxide or contains cerium oxide.

6. Electrochromic light valve according to Claim 5, characterized in that the passive electrochromic film (3) is a mixture of cerium(III) and/or cerium(IV) oxide and 10 mol % to 90 mol %, preferably 50 mol %, of titanium(II), titanium(III) or titanium(IV) oxide, the mol % values relating to the Ce and Ti metal contents.

7. Electrochromic light valve according to Claim 5, characterized in that the passive electrochromic film (3) is a mixture of cerium(III) and/or cerium(IV) oxide and 10 mol % to 90 mol % of tungsten oxide, preferably 20 mol % of tungsten oxide, the mol % values relating to the Ce and W metal contents.

8. Electrochromic light valve according to one of Claims 1 to 7, characterized in that the active electrochromic film (2) comprises one transition metal oxide or several transition metal oxides or contains one transition metal oxide or several transition metal oxides.

9. Electrochromic light valve according to Claim 8, characterized in that the transition metal oxide is WOᵤ, where u is in the range from 2 to 3, preferably 2.7.

10. Electrochromic light valve according to one of Claims 1 to 9, characterized in that the thickness of the active and/or the passive electrochromic film (2, 3) is between 0.05 and 10 µm.

11. Electrochromic light valve according to one of Claims 1 to 10, characterized in that the electrolyte (4) is polyvinylbutyral, which is donated with the element which provides the positive ions or with the elements which provide the positive ions.

12. Electrochromic light valve according to one of Claims 1 to 10, characterized in that the electrolyte (4) is a liquid crystal or a liquid crystalline polymer with preferred ion conductivity perpendicular to the film plane.

13. Electrochromic light valve according to Claim 12, characterized in that the liquid crystal or the liquid crystalline polymer is of the nematic or discotic type.

14. Electrochromic light valve according to one of Claims 1 to 13, characterized in that the electrode (5) associated with the active electrochromic film (2) and/or the electrode (6) associated with the passive electrochromic film (3) comprises indium-tin oxide or tin oxide or contains indium-tin oxide or tin oxide, and that the electrode (5) associated with the active electrochromic film (2) and/or that the electrode (6) associated with the passive electrochromic film (3) is saturated with the element which provides the ions of the species concerned or with the elements which provide the ions of the species concerned.

15. Electrochromic light valve according to Claim 14, characterized in that the electrode (5) associated with the active electrochromic film (2) and/or the electrode (6) associated with the passive electrochromic film (3) is saturated with lithium and/or sodium.

16. Method of manufacturing an electrochromic light valve (1) according to one of Claims 1 to 15, in which a passive electrochromic film (3), which contains at least one of the elements which provide the ions of the species concerned, is produced, characterized in that the passive electrochromic film (3) is supersaturated with the element which provides the ions of the species concerned or with several elements which provide the ions of the species concerned.

17. Method according to Claim 16, characterized in that in order to form the supersaturated passive electrochromic film (3), a carrier substance film for an element which provides the ions of the species concerned, or for several elements which provide the ions of the species concerned, is initially manufactured, which does not contain the element or the elements or is not yet supersaturated with it/them, and that the element or elements is/are donated to this carrier substance film until it is supersaturated.

18. Method according to Claim 17, characterized in that the carrier substance film which does not contain the element or the elements, or does not contain it/them to supersaturation, has this element or these elements donated in an electrolyte at a temperature substantially above the operating temperature of the light valve (1), until no further substantial acceptance of the element or the elements takes place per unit of time.

19. Method according to Claim 17 or 18, characterized in that the donation is carried out before the light valve (1) is assembled.

20. Method according to Claim 17, characterized in that the carrier substance film, which does not contain the element or the elements or does not contain it/them to supersaturation, is donated by coating with the element or the elements and diffusion, the diffusion taking place at a temperature substantially above the operating temperature of the light valve (1).

21. Method according to Claim 16, characterized in that the supersaturated passive electrochromic film (3) is manufactured in a single process step by being simultaneously constructed from the element or the elements and a carrier substance for this element or these elements, this element or these elements being incorporated into this film (3) when the film (3) is being constructed, in a quantity such that the film (3) is supersaturated with the element or the elements in the course of its construction.

22. Method according to Claim 21, characterized in that the passive electrochromic film (3) is manufactured by means of sputtering or reactive sputtering of a target which contains the starting substances for the carrier substance and the element or the elements.

23. Method according to Claim 21, characterized in that the passive electrochromic film (3) is manufactured by simultaneous vacuum metallizing of the carrier substance film and the element or the elements.

24. Method according to Claim 16, characterized in that the passive electrochromic film (3) is constructed from several individual films of a carrier substance or several carrier substances and/or the element or the elements which are manufactured over one another and after one another.

25. Method according to Claim 24, characterized in that individual films of carrier substance(s) and individual films of the element or the elements are produced over one another in turns.

26. Method according to Claim 24 or 25, characterized in that the individual films are produced by sputtering and/or reactive sputtering.

27. Method according to Claim 24 or 25, characterized in that the individual films are produced by vacuum metallizing.

28. Method according to one of Claims 17 to 27, characterized in that the carrier substance is or contains an amorphous or polycrystalline oxide or mixed oxide.

29. Method according to Claim 28, characterized in that the amorphous or polycrystalline oxide is cerium oxide or titanium oxide.

30. Method according to Claim 28, characterized in that the amorphous or polycrystalline mixed oxide is Ce_{y}Ti_{z}Oᵤ.

31. Method according to Claim 28, characterized in that the mixed oxide is a mixture of cerium(III) and/or cerium(IV) oxide and 10 mol % to 90 mol %, preferably 50 mol %, of titanium(II), titanium(III) or titanium(IV) oxide, the mol % values relating to the Ce and Ti metal contents.

32. Method according to Claim 28, characterized in that the mixed oxide is a mixture of cerium(III) and/or cerium(IV) oxide and 10 mol % to 90 mol % of tungsten oxide, preferably 20 mol % of tungsten oxide, the mol % values relating to the Ce and W metal contents.

33. Method according to one of Claims 16 to 32, characterized in that the element is lithium or sodium.

34. Method according to one of Claims 16 to 32, characterized in that the elements are lithium and sodium.

35. Method according to Claim 22 or 26 in conjunction with one of Claims 28 to 34, characterized in that the target is a metallic target which contains or comprises cerium and/or titanium and lithium and/or sodium and the reactive sputtering is carried out in an atmosphere containing oxygen.

36. Method according to Claim 35, characterized in that the target contains or comprises Liₓ₁Ce_{y1}Ti_{z1} and/or Naₓ₂Ce_{y2}Ti_{z2}.

37. Method according to Claim 22, characterized in that the target contains or comprises cerium oxide and/or titanium oxide and lithium and/or sodium.

38. Method according to Claim 37, characterized in that the target contains or comprises Liₓ₁Ce_{y1}Ti_{z1}Oᵤ₁ and/or Naₓ₂Ce_{y2}Ti_{z2}Oᵤ₂.

39. Method according to one of Claims 16 to 38, characterized in that the passive electrochromic film (3), preferably before the light valve (1) is assembled, is provided, in particular saturated and/or donated in the manner stated, with another element of any other kind or with several elements of any other kind.

40. Method according to one of Claims 16 to 39, characterized in that the active electrochromic film (2), preferably before the light valve (1) is assembled, is provided, in particular donated, with an element which provides the ions of the species concerned or with several elements which provide the ions of the species concerned, up to a specified degree below the saturation limit.

41. Method according to one of Claims 16 to 40 for manufacturing an electrochromic light valve according to Claim 14 or 15, characterized in that the electrode (5) associated with the active electrochromic film (2) and/or the electrode (6) associated with the passive electrochromic film (3) is saturated with the element which provides the ions of the species concerned or with the elements which provide the ions of the species concerned.

42. Method according to Claim 41, characterized in that the electrode (5) associated with the active electrochromic film (2) and/or the electrode (6) associated with the passive electrochromic film (3) is saturated with lithium and/or sodium.

43. Use of the electrochromic light valve (1) manufactured according to one of Claims 16 to 42 or constructed according to one of Claims 1 to 15 as windscreens, optical components and spectacle lenses whose light transmission is controllable by absorption and/or reflection.

44. Use of the light valve (1) manufactured according to one of Claims 16 to 42 or constructed according to one of Claims 1 to 15 as a controllable absorber and/or reflector in the solar field or as an electrically chargeable energy store.

45. Use of the electrochromic light valve (1) manufactured according to one of Claims 16 to 42 or constructed according to one of Claims 1 to 15 as an electrically tunable medium in the resonator of a Fabry and Pérot interferometer.

## Revendications

1. Soupape optique électrochrome (1) à une couche électrochrome (2) active, c.-à-d. variable en couleur, et une couche électrochrome (3) passive, c.-à-d. demeurant essentiellement inchangée en couleur, entre lesquelles es disposé un électrolyte (4) et dont chacune est raccordée à une électrode (5, 6) respectivement affectée, dont au moins une est transparente, la coloration de ladite couche électrochrome active (2) étant variable de façon réversible par absorption ou dégagement d'électrons via ladite électrode (5) affectée, et des ions d'un élément prédéterminé ou de plusieurs éléments prédéterminés via ledit électrolyte (4), à dégagement simultané des ions de même espèce dudit élément ou desdits éléments dans ledit électrolyte (4), ou à absorption simultanée dudit électrolyte (4),
**caractérisée en ce** que ladite couche électrochrome passive (3) est sursaturée par ledit élément qui fournit lesdits ions de même espèce, ou lesdits éléments qui fournissent lesdits ions de même espèce, de façon qu'elle contient une quantité dudit élément ou desdits éléments qui est plus grande que celle qui doit être disponible pour une coloration maximale de ladite couche électrochrome active (2).

2. Soupape optique électrochrome selon la revendication 1, dans laquelle ladite couche électrochrome passive (3) est sursaturée de façon multiple par ledit élément qui fournit lesdits ions de même espèce, ou lesdits éléments qui fournissent lesdits ions de même espèce.

3. Soupape optique électrochrome selon la revendication 1 ou 2, dans laquelle ledit élément qui fournit lesdits ions de même espèce est lithium ou sodium.

4. Soupape optique électrochrome selon la revendication 1 ou 2, dans laquelle lesdits éléments qui fournissent lesdits ions de même espèce sont lithium et sodium.

5. Soupape optique électrochrome selon les revendications 1, 2, 3 ou 4, dans laquelle ladite couche électrochrome passive (3) est formée par ou contient l'oxyde de cérium.

6. Soupape optique électrochrome selon la revendication 5, dans laquelle ladite couche électrochrome passive (3) est un mélange d'oxyde de cérium et/ou céreux et de 10 pour cent molaire à 90 pour cent molaire, de préférence 50 pour cent molaire, d'oxyde de titane, titaneux ou titanique, ces indications en pour cent molaire se référant aux fractions métalliques de Ce et Ti.

7. Soupape optique électrochrome selon la revendication 5, dans laquelle ladite couche électrochrome passive (3) est un mélange d'oxyde de cérium et/ou céreux et de 10 pour cent molaire à 90 pour cent molaire, de préférence 20 pour cent molaire, d'oxyde de tungstène, ces indications en pour cent molaire se référant aux fractions métalliques de Ce et W.

8. Soupape optique électrochrome selon une quelconque des revendications 1 à 7, dans laquelle ladite couche électrochrome active (2) est formée par l'oxyde d'un métal transitoire ou plusieurs oxydes de métal transitoire, ou contient l'oxyde d'un métal transitoire ou plusieurs oxydes de métal transitoire.

9. Soupape optique électrochrome selon la revendication 8, dans laquelle ledit oxyde de métal transitoire est Woᵤ, à "u" étant dans la gamme entre 2 et 3, de préférence correspondant à 2.7.

10. Soupape optique électrochrome selon une quelconque des revendications 1 à 9, dans laquelle l'épaisseur de ladite couche électrochrome active et/ou de ladite couche passive (2, 3) a une valeur entre 0.05 et 10 µm.

11. Soupape optique électrochrome selon une quelconque des revendications 1 à 10, dans laquelle ledit électrolyte (4) est en butyrale polyvinylique, dopé par ledit élément qui fournit les ions positifs, ou par lesdits éléments qui fournissent les ions positifs.

12. Soupape optique électrochrome selon une quelconque des revendications 1 à 10, dans laquelle ledit électrolyte (4) est un cristal liquide ou un polymère à cristaux liquides, à conduction ionique de préférence en sens orthogonal au plan de la couche.

13. Soupape optique électrochrome selon la revendication 12, dans laquelle ledit cristal liquide ou ledit polymère à cristaux liquides est du type nématique ou discotique.

14. Soupape optique électrochrome selon une quelconque des revendications 1 à 13, dans laquelle ladite électrode (5), qui est affectée à ladite couche électrochrome active (2), et/ou ladite électrode (6) affectée à ladite couche électrochrome passive (3), est formée par l'oxyde d'indium stannique ou l'oxyde stannique ou contient d'oxyde d'indium stannique ou d'oxyde stannique, et dans laquelle ladite électrode (5), qui est affectée à ladite couche électrochrome active (2), et/ou ladite électrode (6) affectée à ladite couche électrochrome passive (3), est formée est saturée par ledit élément qui fournit lesdits ions de même espèce, ou lesdits éléments qui fournissent lesdits ions de même espèce.

15. Soupape optique électrochrome selon la revendication 14, dans laquelle ladite électrode (5), qui est affectée à ladite couche électrochrome active (2), et/ou ladite électrode (6) affectée à ladite couche électrochrome passive (3), est saturée en lithium et/ou sodium.

16. Procédé de fabrication d'une soupape optique électrochrome (1) selon une quelconque des revendications 1 à 15, dans lequel on produit une couche électrochrome passive (3), qui contient au moins un des élément qui fournissent lesdits ions de même espèce,
**caractérisé en ce** que ladite couche électrochrome passive (3) est sursaturée par ledit élément qui fournit lesdits ions de même espèce, ou par plusieurs éléments qui fournissent lesdits ions de même espèce.

17. Procédé selon la revendication 16, dans lequel on produit d'abord une couche à matière porteur d'un élément, qui fournit lesdits ions de même espèce, ou de plusieurs éléments, qui fournissent lesdits ions de même espèce, afin de former ladite couche électrochrome passive (3) sursaturée, qui ne contient pas ledit élément ou lesdits éléments ou n'est pas encore sursaturée par cet élément ou ces éléments, et dans lequel ladite couche à matière porteur est dopée par ledit élément ou lesdits éléments jusqu'au niveau de sursaturation.

18. Procédé selon la revendication 17, dans laquelle ladite couche à matière porteur, qui ne contient pas ledit élément ou lesdits éléments ou les ne contient qu'à un niveau au dessous du niveau de sursaturation, est dopée par ledit élément ou lesdits éléments dans un électrolyte, à une température essentiellement plus haute que la température de fonctionnement de la soupape optique (1), jusqu'au point où il n'y a plus une absorption essentielle dudit élément ou desdits éléments par unité de temps.

19. Procédé selon la revendication 17 ou 18, dans lequel le dopage se fait avant l'assemblage de ladite soupape optique (1).

20. Procédé selon la revendication 17, dans lequel ladite couche à matière porteur, qui ne contient pas ledit élément ou lesdits éléments ou les ne contient qu'à un niveau au dessous du niveau de sursaturation, est dopée par enduction d'une couche mince dudit élément ou desdits éléments, et par diffusion à l'intérieur, cette diffusion à l'intérieur se faisant à une température essentiellement plus haute que la température de fonctionnement de ladite soupape optique (1).

21. Procédé selon la revendication 16, dans lequel ladite couche électrochrome passive (3) sursaturée est produite, dans une seule étape de procédé, par formation moyennant ledit élément ou lesdits éléments et une matière porteur pour cet élément ou ces éléments, par incorporation, au cours de la formation de ladite couche (3), dudit élément ou desdits éléments dans une telle quantité que ladite couche (3) soit sursaturée par ledit élément ou lesdits éléments au cours de sa formation.

22. Procédé selon la revendication 21, dans lequel ladite couche électrochrome passive (3) est produite par crépitément ou crépitément réactif d'une cible, qui contient les matières premières pour la matière porteur et ledit élément ou lesdits éléments.

23. Procédé selon la revendication 21, dans lequel ladite couche électrochrome passive (3) est produite par métallisation sous vide simultanée de ladite couche à matière porteur et dudit élément ou desdits éléments.

24. Procédé selon la revendication 16, dans lequel ladite couche électrochrome passive (3) est formée par une pluralité de couches individuelles produites l'une sur l'autre et l'une après l'autre, en une matière porteur ou plusieurs matières porteur et/ou ledit élément ou lesdits éléments.

25. Procédé selon la revendication 24, dans lequel on produit des couches individuelles en matière(s) porteur et des couches individuelles en ledit élément ou lesdits éléments, en alternance l'une sur l'autre.

26. Procédé selon la revendication 24 ou 25, dans lequel lesdites couches individuelles sont produites par crépitément et/ou crépitément réactif.

27. Procédé selon la revendication 24 ou 25, dans lequel lesdites couches individuelles sont produites par métallisation sous vide.

28. Procédé selon une quelconque des revendications 17 à 27, dans lequel ladite matière porteur est ou contient un oxyde ou un mélange d'oxydes amorphe ou polycristallin.

29. Procédé selon la revendication 28, dans lequel ledit oxyde amorphe ou polycristallin est l'oxyde de cérium ou de titane.

30. Procédé selon la revendication 28, dans lequel ledit mélange d'oxydes amorphe ou polycristallin est Ce_{y}TiₓOᵤ.

31. Procédé selon la revendication 28, dans lequel ledit mélange d'oxydes est un mélange d'oxyde de cérium et/ou céreux et de 10 pour cent molaire à 90 pour cent molaire, de préférence 50 pour cent molaire, d'oxyde de titane, titaneux ou titanique, ces indications en pour cent molaire se référant aux fractions métalliques de Ce et Ti.

32. Procédé selon la revendication 28, dans lequel ledit mélange d'oxydes est un mélange d'oxyde de cérium et/ou céreux et de 10 pour cent molaire à 90 pour cent molaire, de préférence 20 pour cent molaire, d'oxyde de tungstène, ces indications en pour cent molaire se référant aux fractions métalliques de Ce et W.

33. Procédé selon une quelconque des revendications 16 à 32, dans lequel ledit élément est lithium ou sodium.

34. Procédé selon une quelconque des revendications 16 à 32, dans lequel lesdits éléments sont lithium et sodium.

35. Procédé selon la revendication 22 ou 26, en combinaison avec une quelconque des revendications 28 à 34, dans lequel ladite cible est une cible métallique, qui contient ou est formée par de cérium et/ou de titane ainsi que de lithium et/ou de sodium, et dans lequel le crépitément réactif se fait dans une atmosphère oxygénifère.

36. Procédé selon la revendication 35, dans lequel ladite cible contient ou est formée par Liₓ₁Ceₓ₁Tiₓ₁ et/ou Naₓ₂,Ceₓ₂Tiₓ₂.

37. Procédé selon la revendication 22, dans lequel ladite cible contient ou est formée par oxyde de cérium et/ou oxyde de titane ainsi que lithium et/ou sodium.

38. Procédé selon la revendication 37, dans lequel ladite cible contient ou est formée par Liₓ₁Ce_{y1}Ti_{z1} Oᵤ₁ et/ou Naₓ₂Ce_{y2}Ti_{z2}Oᵤ₂.

39. Procédé selon une quelconque des revendications 16 à 38, dans lequel ladite couche électrochrome passive (3) est prévue, en particulier saturée et/ou dopée de façon mentionnée, d'un autre élément quelconque ou plusieurs autres éléments quelconques, de préférence avant l'assemblage de la soupape optique (1).

40. Procédé selon une quelconque des revendications 16 à 39, dans lequel ladite couche électrochrome active (2) est prévue, en particulier saturée et/ou dopée, d'un élément qui fournit lesdits ions de même espèce, ou plusieurs éléments qui fournissent lesdits ions de même espèce, jusqu'à un niveau déterminée au dessous de la limite de saturation, de préférence avant l'assemblage de la soupape optique (1).

41. Procédé selon une quelconque des revendications 16 à 40 pour la fabrication d'une soupape optique électrochrome selon la revendication 14 ou 15, dans lequel ladite électrode (5), qui est affectée à ladite couche électrochrome active (2), et/ou ladite électrode (6), qui est affectée à ladite couche électrochrome passive (3), est saturée par ledit élément qui fournit lesdits ions de même espèce, ou par lesdits éléments qui fournissent lesdits éléments de même espèce.

42. Procédé selon la revendication 41, dans lequel ladite électrode (5), qui est affectée à ladite couche électrochrome active (2), et/ou ladite électrode (6), qui est affectée à ladite couche électrochrome passive (3), est saturée en lithium et/ou sodium.

43. Application de la soupape optique électrochrome (1) formée selon une quelconque des revendication 1 à 15 ou fabriquée selon une quelconque des revendications 16 à 42, comme vitres, composants optiques et verres de lunetterie, à une transparence qui est commandable par absorption et/ou réflexion.

44. Application de la soupape optique électrochrome (1) formée selon une quelconque des revendication 1 à 15 ou fabriquée selon une quelconque des revendications 16 à 42, comme absorbeur et/ou réflecteur commandable dans le domaine solaire, ou comme accumulateur d'énergie électriquement rechargeable.

45. Application de la soupape optique électrochrome (1) formée selon une quelconque des revendication 1 à 15 ou fabriquée selon une quelconque des revendications 16 à 42, comme milieu électriquement accordable dans le résonateur d'un interféromètre de Fabry-Perrot.
